# EUROPÄISCHE PATENTSCHRIFT

(11) **EP 1 204 460 B1**
(45) Veröffentlichungstag und Bekanntmachung des Hinweises auf die Patenterteilung: **09.06.2004**
(21) Anmeldenummer: 00909366.7
(22) Anmeldetag: 18.03.2000
(51) Int. Cl.: B01D 61/06

(54) **VERFAHREN UND VORRICHTUNG ZUM ENTSALZEN VON WASSER**
METHOD AND DEVICE FOR DESALTING WATER
PROCEDE ET DISPOSITIF POUR DESSALER DE L'EAU

(30) Priorität: 20.07.1999 DE 19933147
(43) Veröffentlichungstag der Anmeldung: 15.05.2002
(73) Patentinhaber: Wobben, Aloys, 26607 Aurich (DE)
(72) Erfinder: Wobben, Aloys, 26607 Aurich (DE)
(74) Vertreter: Keck, Stephan
(86) Internationale Anmeldenummer: PCT/EP2000/002417
(87) Internationale Veröffentlichungsnummer: WO 2001/005490

(56) Entgegenhaltungen:
- DE-A- 2 448 985
- US-A- 3 825 122
- US-A- 5 628 198

## Beschreibung

Die Erfindung betrifft ein Verfahren zum Entsalzen von Wasser mit der Umkehrosmose gemäß dem Oberbegriff des Anspruchs 1 sowie eine Vorrichtung zur Durchführung dieses Verfahrens.

Ein solches Verfahren und eine solche Vorrichtung sind aus der WO 97/21483 bekannt. Dabei wird die Druckbeaufschlagung des Salzwassers durch Anlegen eines äußeren Drucks an ein Druckmedium erreicht, dessen Druck auf das Salzwasser übertragen wird. In einer Ausführungsform ist dabei vorgesehen, daß das Salzwasser zunächst mit einer ersten Pumpe in eine erste Kammer einer Drei-Kammer-Anordnung mit relativ niedrigem Druck gepumpt wird. Anschließend wird mittels einer Hochdruckpumpe ein hoher Druck auf ein in einer zweiten Kammer der Drei-Kammer-Anordnung befindliches Druckmedium ausgeübt, wodurch das in der ersten Kammer befindliche Salzwasser mit dem für die Umkehrosmose erforderlichen hohen Druck auf das Membranmodul geleitet wird. Das konzentrierte Salzwasser, das die Membran des Membranmoduls nicht durchtreten hat, wird dabei gleichzeitig in eine dritte Kammer der Drei-Kammer-Anordnung geleitet. Wenn nun wiederum Salzwasser mit der ersten Pumpe in die erste Kammer gepumpt wird, wird schließlich das konzentrierte Salzwasser aus der dritten Kammer und endgültig aus der Vorrichtung ausgeleitet.

Zwar muß die Hochdruckpumpe bei dem bekannten Verfahren nicht mehr wie bei anderen bekannten Verfahren Salzwasser unter hohem Druck zu dem Membranmodul pumpen, was aufgrund der Oxidationsgefahr wegen des Salzwassers hohe Materialanforderungen an die Pumpe stellte und diese dadurch enorm verteuerte, sondern nur noch ein Druckmedium. Eine Hochdruckpumpe zur Herstellung des für die Umkehrosmose erforderlichen Drucks, ist jedoch noch immer erforderlich, was sich auf die Energiebilanz und damit auf den Wirkungsgrad der Gesamtvorrichtung negativ auswirkt. Zudem arbeitet das bekannte Verfahren in zwei Verfahrensschritten, wobei nur in einem der beiden Verfahrensschritte jeweils entsalztes Wasser erzeugt wird, während in dem anderen Verfahrensschritt Salzwasser nachgeführt und das konzentrierte Salzwasser abgeleitet wird.

Der Erfindung liegt die Aufgabe zugrunde, ein hinsichtlich des Wirkungsgrades verbessertes Verfahren und eine Vorrichtung zur Durchführung dieses Verfahrens anzugeben.

Diese Aufgabe wird ausgehend von dem eingangs genannten Verfahren und der eingangs genannten Vorrichtung durch das Verfahren gemäß Anspruch 1 bzw. durch die Vorrichtung gemäß Anspruch 7 gelöst.

Der Erfindung liegt dabei die Erkenntnis zugrunde, daß eine den für die Umkehrosmose erforderlichen hohen Druck aufbringende Pumpe gänzlich entfallen und durch eine einen wesentlich niedrigeren Druck aufbringende Pumpe ersetzt werden kann, wenn der Druck, den das konzentrierte Salzwasser am Ausgang des Membranmoduls zwangsläufig aufweist, durch kontinuierliche Rückführung dieses konzentrierten Salzwassers in die Druckausgleichsvorrichtung zur Druckbeaufschlagung des in die Druckausgleichsvorrichtung eingepumpten Salzwassers ausgenutzt wird. Wesentlich ist hierbei vor allem auch, daß dies kontinuierlich erfolgt, da ansonsten der Druck in der Zuleitung des Salzwassers von der Druckausgleichsvorrichtung an das Membranmodul nachlassen und wie bei dem bekannten Verfahren von einer Hochdruckpumpe nachgeliefert werden müßte und auch eine kontinuierliche Erzeugung von entsalztem Wasser nicht möglich wäre.

Vorteilhafte Weiterbildungen des Verfahrens und der Vorrichtung ergeben sich insbesondere aus den Unteransprüchen.

Die Erfindung wird nachfolgend anhand der Zeichnungen näher erläutert.

Es zeigen:
- Figur 1: ein Blockschaltbild zur Erläuterung des erfindungsgemäßen Verfahrens,
- Figur 2: eine Ausführungsform der erfindungsgemäßen Vorrichtung,
- Figur 3a,b: eine Darstellung dieser Ausführungsform in verschiedenen Arbeitsphasen und
- Figur 4: eine Darstellung der Betriebszustände dieser Ausführungsform während eines kompletten Arbeitszyklus.

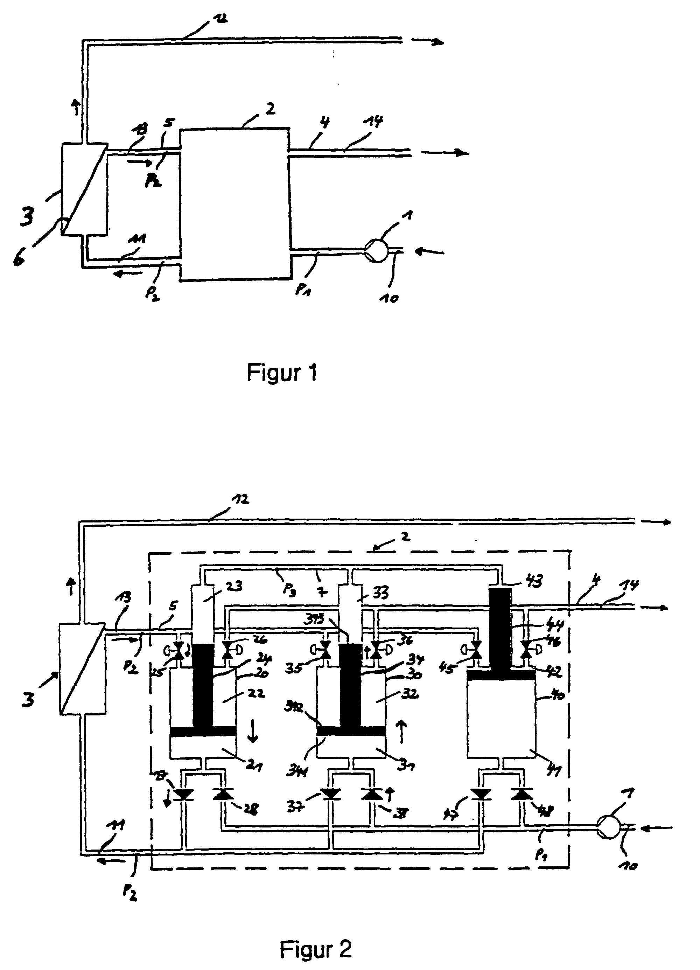

Das Blockschaltbild in Figur 1 zeigt eine Förderpumpe 1 zum Einleiten von Salzwasser 10 in eine Druckausgleichsvorrichtung 2 unter einem ersten Druck p₁. Aus der Druckausgleichsvorrichtung 2 wird dasselbe Salzwasser 11, das nun jedoch mit dem für die Umkehrosmose erforderlichen hohen Arbeitsdruck beaufschlagt ist, dem Membranmodul 3 zugeleitet. Dort tritt ein Teil des Salzwassers 11 aufgrund des hohen Druckes durch die Membran 6 hindurch (zum Beispiel 25% des Salzwassers 11), wird dabei entsalzt und als entsalztes Wasser 12 abgeleitet. Der restliche Teil des Salzwassers 11 (zum Beispiel 75 %) kann die Membran 6 nicht durchtreten und wird mittels der Verbindungsleitung 5 als konzentriertes Salzwasser 13, das noch immer unter dem hohen Druck p₂ steht, der Druckausgleichsvorrichtung 2 wieder zugeleitet. Dort wird dieser hohe Druck in noch näher zu erläuternder Weise dazu ausgenutzt, das in die Druckausgleichsvorrichtung 2 eingeleitete Salzwasser 10 mit diesem hohen Druck zu beaufschlagen und dem Membranmodul 3 an dessen Eingang zuzuleiten. Gleichzeitig wird in ebenfalls noch näher zu erläuternder Weise der Druck p₁, mit dem die Förderpumpe 1 das Salzwasser 10 beaufschlagt, in der Druckausgleichsvorrichtung 2 dazu genutzt, darin befindliches konzentriertes Salzwasser 14 über die Ableitung 4 endgültig abzuleiten. Alle beschriebenen Vorgänge erfolgen dabei gleichzeitig und kontinuierlich, so daß eine den hohen Arbeitsdruck nachliefernde Hochdruckpumpe nicht erforderlich ist und entsalztes Wasser 12 kontinuierlich zur Verfügung steht.

Anhand der in Figur 2 dargestellten Ausführungsform der Erfindung soll insbesondere die Ausgestaltung und Funktionsweise der Druckausgleichsvorrichtung 2 näher erläutert werden. Diese weist hier drei identische Kolbenvorrichtungen 20, 30, 40 auf, die jeweils eine Eingangskammer 21, 31, 41 zur Aufnahme des Salzwassers 10, jeweils eine Ausgangskammer 22, 32, 42 zur Aufnahme des konzentrierten Salzwassers 13 und jeweils eine Druckkammer 23, 33,43 aufweisen. Innerhalb der Kolbenvorrichtungen 20, 30, 40 ist jeweils ein spezieller Kolben 24, 34, 44 angeordnet, der den Kolbeninnenraum in die genannten Kammern unterteilt und der im Bild in vertikaler Richtung innerhalb der Kolbenanordnung verfahrbar ist. Von der Förderpumpe 1 führt jeweils eine Zuleitung mit einem (passiven) Rückschlagventil 28, 38, 48 zu den Eingangskammern 21, 31, 41. Die Rückschlagventile 28, 38, 48 sind dabei derart ausgestaltet, daß sie sich öffnen und einen Durchfluß ermöglichen, wenn der Druck in der Zuleitung größer ist als in den Eingangskammern 21, 31, 41. Ebenso befinden sich in den Zuleitungen von den Eingangskammern 21, 31, 41 zum Membranmodul 3 solche Rückschlagventile 27, 37, 47, jedoch mit anderer Durchflußrichtung. In der Zuleitung 5 vom Membranmodul zu den Ausgangskammern 22, 32, 42 und in der Ableitung 4 von den Ausgangskammern 22, 32,42 sind dagegen aktiv schaltbare Ventile 25, 35, 45 bzw. 26, 36, 46 angeordnet, über die der Zufluß des konzentrierten Salzwassers 13 vom Membranmodul 3 bzw. der Abfluß des konzentrierten Salzwassers 14 aus der Druckausgleichsvorrichtung 2 gesteuert werden kann. Die Druckkammern 23, 33, 43 sind über eine Verbindungsleitung 7 miteinander verbunden, um einen Druckausgleich zwischen diesen drei Kammern zu ermöglichen und jeweils den gleichen Druck p₃ in allen drei Kammern zu gewährleisten.

Im folgenden wird die Funktionsweise der Vorrichtung erläutert: Die Förderpumpe 1 pumpt das Salzwasser 10 mit einem ersten Druck p₁ (zum Beispiel 17,5 bar) und 100% der benötigten Menge in die Eingangskammer 31, wobei sich das Rückschlagventil 38 öffnet, was durch den nebenstehenden Pfeil angedeutet sein soll. Zu diesem Zeitpunkt ist das Ventil 36 geöffnet (angedeutet durch den nebenstehenden Pfeil), so daß das in der Ausgangskammer 32 befindliche konzentrierte Salzwasser 14 über die Ableitung 4 abfließen kann. Aufgrund des mit dem Druck p₁ in die Eingangskammer 31 fließenden Salzwassers 10 wirkt auf den Kolben 34 eine Kraft F = p₁ **•** A, wobei A die Fläche der Kolbenvorderseite 341 ist. Dadurch wird der Kolben 34, wie in der Figur angedeutet, nach oben gedrückt und das in der Ausgangskammer 32 befindliche konzentrierte Salzwasser über das Ventil 36 und die Ableitung 4 abgeleitet. Aufgrund des in der Druckkammer 33 herrschenden Drucks p₃ wird dabei eine Gegenkraft F_{G} = p₃ • A_{G} (A_{G} ist die Fläche des Teils 343 der Kolbenrückseite, zum Beispiel ein Viertel der Kolbenrückseite) ausgeübt, die nahezu gleich groß oder etwas kleiner als die Kraft F ist. In der gleichen gezeigten Arbeitsphase ist das Ventil 25 geöffnet, so daß das konzentrierte Salzwasser 13 von dem Membranmodul 3 in die Ausgangskammer 22 mit dem Druck p₂ (zum Beispiel 70 bar) einfließt. Gleichzeitig wird auch in der Druckkammer 23, die aufgrund des sich nach oben bewegenden Kolbens 34 über die Verbindungsleitung 7 mit dem Druckmittel gefüllt wird, eine Kraft auf den Kolben 24 ausgeübt, welcher sich deshalb, wie durch die Pfeilrichtung angedeutet, nach unten bewegt. Dadurch wird das in der Eingangskammer 21 befindliche Salzwasser 11 über das geöffnete Rückschlagventil 27 zum Membranmodul 3 geleitet. Dies erfolgt zwangsläufig mit dem Druck p₂ (70 bar), da sowohl in der Ausgangskammer 22 als auch in der Druckkammer 23 ein Druck in dieser Höhe herrscht. Alle anderen Ventile sind in der gezeigten Arbeitsphase geschlossen.

Mit der gezeigten Ausgestaltung der Druckausgleichsvorrichtung 2 wird somit eine Druck-Transformation erreicht, die eine Energierückgewinnung aus dem abfließenden konzentrierten Salzwasser 13 mit sehr hohem Wirkungsgrad- ermöglicht. Eine Hochdruckpumpe, die den für die Umkehrosmose erforderlichen hohen Arbeitsdruck aufbringt, ist deshalb hier nicht erforderlich, sondern nur eine Füllpumpe 1 mit niedrigerer Leistung, die im gezeigten Fall nur einen Druck in Höhe eines Viertels des Arbeitsdrucks aufbringen muß.

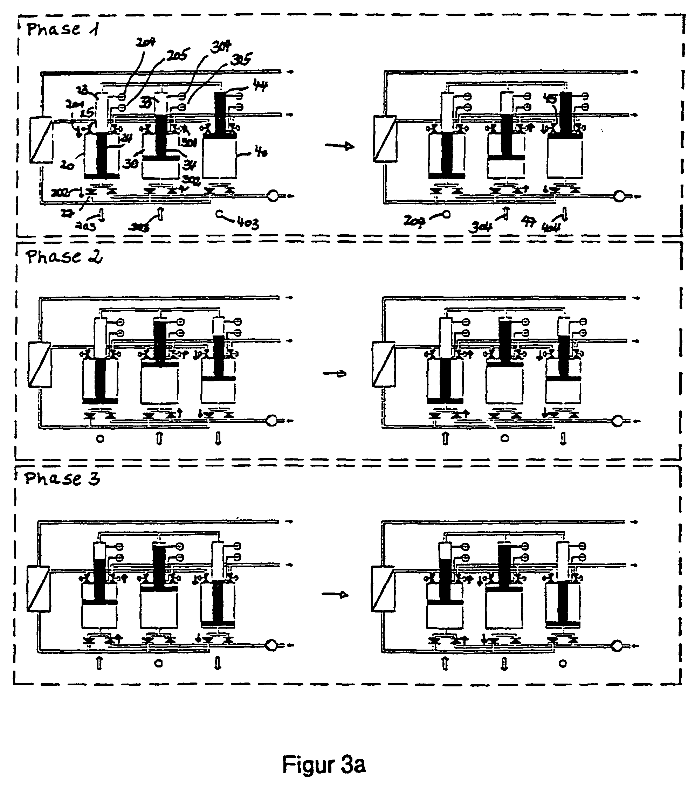

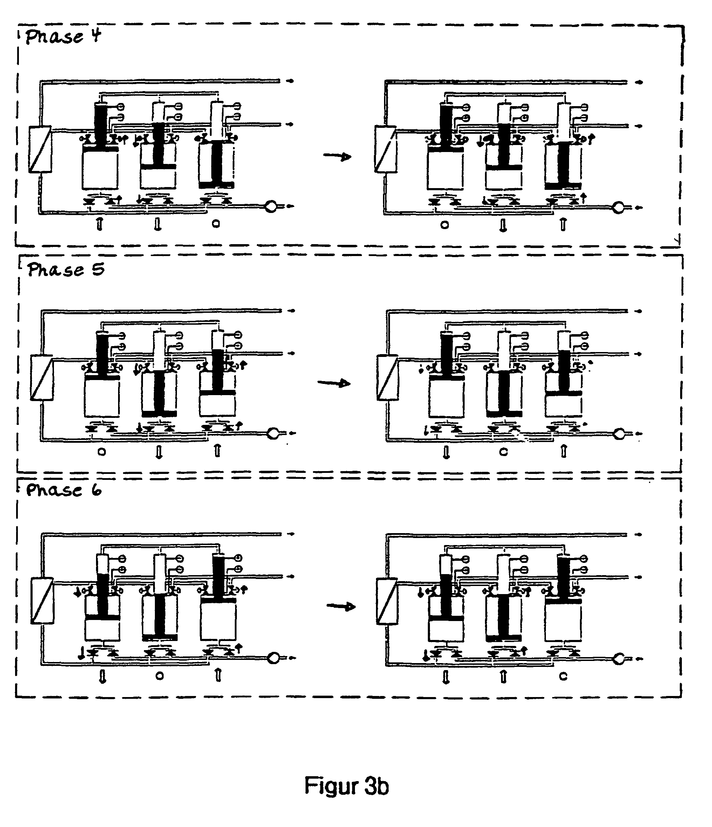

Die erfindungsgemäße Vorrichtung ist in sechs verschiedenen aufeinanderfolgenden Arbeitsphasen in Figur 3a und 3b dargestellt. Pfeile 201 , 202, 301, 302 sollen dabei andeuten, daß ein Ventil geöffnet ist und in welcher Richtung der Durchfluß erfolgt. Pfeile 203, 303 bzw. die Null 403 sollen andeuten, ob und in welcher Richtung sich der Kolben der jeweiligen Kolbenvorrichtung 20, 30, 40 bewegt. Jeweils am oberen und am unteren Ende der Druckkammern 23, 33, 43 der Kolbenvorrichtungen 20, 30, 40 sind Stellungsgeber 204, 205, 304, 305 angeordnet, zur Detektion der Position des Kolbens. Gezeigt ist jeweils im linken Bild jeder Phasendarstellung die Ventilstellung und die Kolbenbewegungsrichtung, die bis zum Erreichen der gerade gezeigten Kolbenstellung galt. Im rechten Bild jeder Phasendarstellung ist dann gezeigt, wie sich ab dem gezeigten Zeitpunkt bei geänderter Ventilschaltung die Kolben bewegen werden. So ist beispielsweise im linken Bild der Darstellung von Phase 1 zu erkennen, daß sich bisher der Kolben 24 bis zum unteren Anschlag nach unten bewegt hat (Pfeil 203), daß der Kolben 34 in einer Aufwärtsbewegung begriffen ist (Pfeil 303) und daß der Kolben 44 in einer oberen Anschlagstellung verharrte (Null 403). Nach einer Ventilschaltung - Ventil 25 wurde geschlossen und Ventil 45 geöffnet; Ventil 27 schließt und Ventil 47 öffnet dann automatisch - verharrt nunmehr, wie im rechten der Bild der Darstellung von Phase 1 zu erkennen ist, der Kolben 24 in seiner unteren Anschlagstellung, während sich der Kolben 34 weiterhin nach oben bewegt und sich der Kolben 44 nach unten bewegt. Nach der letzten gezeigten Phase 6 folgt anschließend wieder Phase 1.

Nachfolgende Tabelle verdeutlicht noch einmal die Ventilschaltung in den sechs gezeigten Phasen, wobei "+" bedeutet "Ventil offen" und "-" bedeutet "Ventil geschlossen".

| Phase Ventil | 1 | 2 | 3 | 4 | 5 | 6 |
|---|---|---|---|---|---|---|
| 25 | + | - | - | - | - | + |
| 26 | - | - | + | + | - | - |
| 35 | - | - | - | + | + | - |
| 36 | + | + | - | - | - | - |
| 45 | - | + | + | - | - | - |
| 46 | - | - | - | - | + | + |
| 27 | + | - | - | - | - | + |
| 28 | - | - | + | + | - | - |
| 37 | - | - | - | + | + | - |
| 38 | + | + | - | - | - | - |
| 47 | - | + | + | - | - | - |
| 48 | - | - | - | - | + | + |

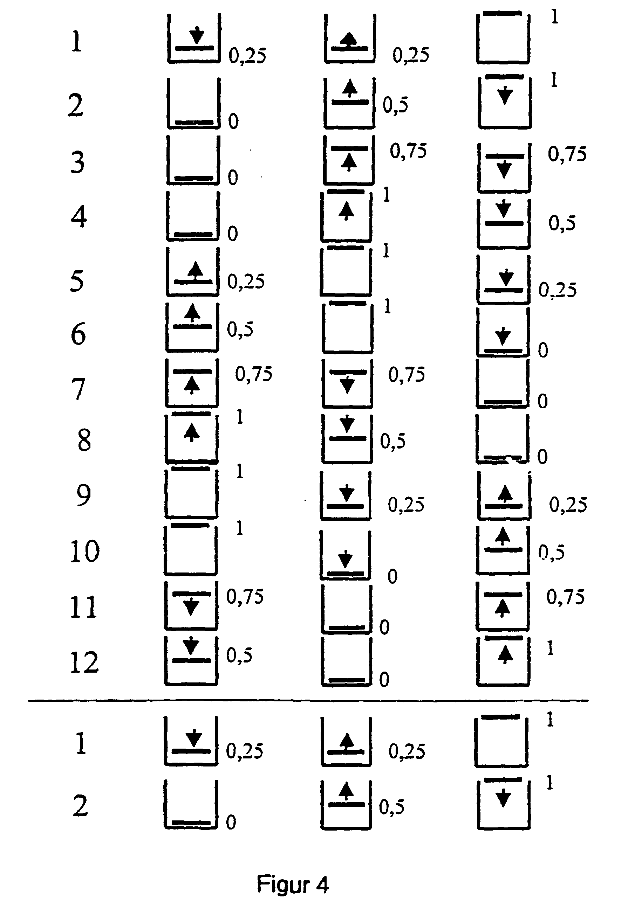

Figur 4 zeigt schließlich die Betriebszustände, das heißt die Stellungen der Kolben während eines kompletten Arbeitszyklus, der hier noch genauer in zwölf einzelne Phasen aufgeteilt ist. Die Pfeilrichtung soll dabei wiederum die Bewegungsrichtung des jeweiligen Kolbens andeuten.

Die Erfindung ist nicht auf die gezeigte Ausführungsform beschränkt, insbesondere kann die Druckausgleichsvorrichtung auch anders ausgestaltet sein. Denkbar sind beispielsweise Ausgestaltungen mit nur zwei Kolbenvorrichtungen oder mehr als drei Kolbenvorrichtungen und/oder unterschiedlichen oder anders gestalteten Kolbenvorrichtungen. Auch sind die angegebenen Zahlenwerte nur Beispielswerte zur Verdeutlichung der Erfindung, so daß sich bei veränderter Kolbengeometrie beispielsweise auch andere Druckverhältnisse ergeben können.

Mit dem erfindungsgemäßen Verfahren und der erfindungsgemäßen Vorrichtung wird ein sehr hoher Wirkungsgrad bei der Energierückgewinnung in Höhe von mindestens 90% erreicht. Die Förderpumpe braucht nur ca. ein Viertel des für die Umkehrosmose erforderlichen Arbeitsdrucks von etwa 70 bar zu erzeugen, was einen hohen Kostenreduktions- und Wartungsvorteil nach sich zieht. Generell werden somit durch die Erfindung die Herstellungskosten für eine Vorrichtung zum Entsalzen von Wasser und Bereitstellung von Trinkwasser deutlich verringert. Das beschriebene Verhältnis der Drücke zueinander (17,5 bar : 70 bar) kann auch in einer anderen Größenordnung bestimmt werden. Dies ist durch eine veränderte Kolbengeometrie möglich. Diese Kolbengeometrie ist nicht auf eine einzige Möglichkeit beschränkt. Je nach Salzgehalt des Wassers kann bzw. sollte der osmosische Druck angepaßt werden. Bei Brackwasser - geringster Salzgehalt - kann ein niedrigerer Druck gewählt werden, in diesem Fall kann das Verhältnis von 1/4 : 3/4 auf zum Beispiel 1/3 : 2/3 geändert bzw. angepaßt werden.

Der Druck in den Druckkammern 23, 33, 43 wird bei der Inbetriebnahme der Vorrichtung hergestellt und anschließend konstant auf diesem Niveau gehalten.

## Patentansprüche

1. Verfahren zum kontinuierlichen Entsalzen von Wasser, insbesondere zum Entsalzen von Meerwasser, wobei
- Salzwasser (11) in ein Membranmodul (3) eingeleitet und in entsalztes Wasser (12) und konzentriertes Salzwasser (13) getrennt wird,
- das Salzwasser (11) mit einem erhöhten Druck (p₂) von einer mehrere Kolbenvorrichtungen (20, 30, 40) aufweisenden Druckausgleichsvorrichtung (2) kontinuierlich dem Membranmodul (3) zugeführt wird,
- das konzentrierte Salzwasser (13) aus der Druckausgleichsvorrichtung (2) unter Abgabe seiner Druckenergie abgeführt wird,
- Salzwasser (10) unter einem Druck (p₁) mittels einer Förderpumpe (1) in die Druckausgleichsvorrichtung (2) eingeleitet wird,
- die Kolbenvorrichtungen (20, 30, 40) an der Kolbenvorderseite eine mit der Förderpumpe (1) und dem Membranmodul (3) verbundene Eingangskammer (21, 31, 41) und an der Kolbenrückseite eine mit dem Membranmodul (3) und einer Ableitung (4) für das konzentrierte Salzwasser (14) verbundene Ausgangskammer (22, 32, 42) aufweisen,
**dadurch gekennzeichnet, daß** mittels einer hydraulischen Verbindung zwischen an der Kolbenrückseite der Kolbenvorrichtungen (20, 30, 40) vorgesehenen Druckkammern (23. 33, 43) im Betrieb ein kontinuierlicher Druck (p₃) auf einen Teil (343) des Kolbens (24, 34, 44) zur Unterstützung des Druckes (p₂) aufgebracht wird, der von dem in die Ausgangskammern (22,32.42) eingeleiteten, konzentrierten Salzwasser (13) auf dem Kolben (24, 34, 44) ausgeübt wird.

2. Verfahren nach Anspruch 1,
**dadurch gekennzeichnet, daß** das konzentrierte Salzwasser (13) wechselweise in die Ausgangskammer (22, 32, 42) einer von mehreren Kolbenvorrichtungen (20, 30, 40) eingeleitet wird, wodurch jeweils gleichzeitig das Salzwasser (11) aus der Eingangskammer (21, 31, 41) derselben Kolbenvorrichtung (20, 30, 40) zum Membranmodul (3) geleitet wird, und daß gleichzeitig in die Eingangskammer (21, 31, 4 1 ) einer anderen Kolbenvorrichtung (20, 30, 40) Salzwasser (10) unter dem ersten Druck (p₁) eingeleitet wird, wodurch aus der Ausgangskammer (22, 32, 42) derselben Kolbenvorrichtung (20, 30, 40) das konzentrierte Salzwasser (14) unter geringem Druck ausgeleitet wird.

3. Verfahren nach Anspruch 2,
**dadurch gekennzeichnet, daß** die Kolbenvorrichtungen (20, 30,40) der Druckausgleichsvorrichtung (2) derart gesteuert werden, daß jeweils gleichzeitig in die Eingangskammer (21, 31, 41) mindestens einer Kolbenvorrichtung (20, 30, 40) Salzwasser (10) eingeleitet, aus der Ausgangskammer (22, 32, 42) derselben Kolbenvorrichtung (20, 30, 40) konzentriertes Salzwasser (14) ausgeleitet, in die Ausgangskammer (22, 32, 42) mindestens einer anderen Kolbenvorrichtung (20, 30, 40) konzentriertes Salzwasser (13) eingeleitet und aus der Eingangskammer (21, 31, 41) derselben Kolbenvorrichtung (20, 30, 40) Salzwasser (11) der Membranvorrichtung (3) zugeleitet wird.

4. Verfahren nach Anspruch 3,
**dadurch gekennzeichnet, daß** die Steuerung der Kolbenvorrichtungen (20, 30, 40) über steuerbare Ein- und Auslaßventile (25 - 28, 35 - 38, 45 - 48) erfolgt.

5. Umkehrosmosevorrichtung zum kontinuierlichen Entsalzen von Wasser, insbesondere zum Entsalzen von Meerwasser,
- mit einem Membranmodul (3) zum Trennen von eingeleitetem Salzwasser (11) in entsalztes Wasser (12) und konzentriertes Salzwasser (13),
- mit einer mehrere Kolbenvorrichtungen (20, 30, 40) aufweisenden Druckausgleichsvorrichtung (2) zum kontinuierlichen Zuführen des Salzwassers (11) mit einem erhöhten Druck (p₂) in den Membranmodul (3) und Abführen des konzentrierten Salzwassers (13) unter Abgabe seiner Druckenergie und
- mit einer Förderpumpe (1) zum Einleiten von Salzwasser (10) unter einem Druck (p₁) zur Druckausgleichsvorrichtung (2), wobei
- die Kolbenvorrichtungen (20, 30,40) an der Kolbenvorderseite eine mit einer Förderpumpe (1) und dem Membranmodul (3) verbundene Eingangskammer (21, 31, 41) aufweisen und
- die Kolbenvorrichtungen (20, 30, 40) an der Kolbenrückseite eine mit dem Membranmodul (3) und einer Ableitung (4) für das konzentrierte Salzwasser (14) verbundene Ausgangskammer (22, 32, 42) aufweisen,
**dadurch gekennzeichnet,**
- **dass** die Kolbenvorrichtungen (20, 30, 40) an der Kolbenrückseite zusätzlich eine Druckkammer (23, 33, 43) aufweisen und die Druckkammern untereinander hydraulisch verbunden sind, so dass im Betrieb ein kontinuierlicher Druck (p₃) auf einen Teil (343) des Kolbens (24, 34, 44) zur Unterstützung des Druckes (p₂) aufbringbar ist, der von dem in die Ausgangskammer (22, 32, 42) eingeleiteten konzentrierten Salzwasser (13) auf den Kolben (24, 34, 44) ausgeübt wird.

6. Vorrichtung nach Anspruch 5,
**dadurch gekennzeichnet, daß** die Kolbenvorrichtungen (20, 30, 40) derart gesteuert werden, daß jeweils gleichzeitig in die Eingangskammer (21, 31, 41) mindestens einer Kolbenvorrichtung (20, 30, 40) Salzwasser (10) eingeleitet, aus der Ausgangskammer (22, 32, 42) derselben Kolbenvorrichtung (20, 30, 40) konzentriertes Salzwasser (14) ausgeleitet, in die Ausgangskammer (22, 32, 42) mindestens einer anderen Kolbenvorrichtung (20, 30, 40) konzentriertes Salzwasser (13) eingeleitet und aus der Eingangskammer (21, 31, 41) derselben Kolbenvorrichtung (20, 30,40) Salzwasser (11) der Membranvorrichtung (3) zugeleitet wird.

7. Vorrichtung nach Anspruch 6,
**dadurch gekennzeichnet, daß** steuerbare Ein- und Auslaßventile (25 - 28, 35 - 38, 45 - 48) zur Steuerung der Kolbenvorrichtungen (20, 30, 40) vorgesehen sind.

8. Vorrichtung nach Anspruch 7,
**dadurch gekennzeichnet**, daßdie Verbindungsleitungen (5) vom Membranmodul (3) zu den Ausgangskammern (22, 32, 42) der Kolbenvorrichtungen (20, 30, 40) und die Ableitungen (4) des konzentrierten Salzwassers (14) aus den Ausgangskammern (22, 32, 42) aktiv schaltbare Ventile (25, 26, 35, 36, 45, 46) aufweisen.

9. Vorrichtung nach einem der Ansprüche 5 bis 8,
**dadurch gekennzeichnet, daß** die Druckausgleichsvorrichtung (2) drei identische Kolbenvorrichtungen (20, 30, 40) aufweist.

10. Vorrichtung nach einem der Ansprüche 5 bis 9,
**dadurch gekennzeichnet, daß** die Kolben (24,34,44) der Kolbenvorrichtungen (20, 30, 40) derart ausgestaltet sind, daß der in der Druckkammer (23, 33, 43) herrschende Druck (P₃) auf ein Viertel der Fläche der Kolbenrückseite (343) und der in der Ausgangskammer (22, 32, 42) herrschende Druck auf drei Viertel der Fläche der Kolbenrückseite (342) einwirken kann.

## Claims

1. Method to continuously desalt water in particular to desalt sea water, in which
- salt water (11) is conveyed into a membrane module (3) and separated into desalted water (12) and concentrated salt water (13),
- the salt water (11) is fed continuously at an increased pressure (p₂) from a pressure-compensating device (2), which has a plurality of piston devices (20, 30, 40), to the membrane module (3),
- the concentrated salt water (13) is discharged from the pressure-compensating device (2), releasing its pressure energy,
- salt water (10) at a pressure (p₁) is conveyed into the pressure-compensating device (2) by means of a feed pump (1),
- the piston devices (20, 30, 40) have, on the piston front surface, an intake chamber (21, 31, 41), which is connected to the feed pump (1) and the membrane module (3), and, on the piston rear face, a discharge chamber (22, 32, 42), which is connected to the membrane module (3) and a discharge line (4) for the concentrated salt water (14),
**characterized in that**, in operation a continuous pressure (p₃) is applied, by means of a hydraulic connection between pressure chambers (23, 33, 43) provided on the piston rear face of the piston devices (20, 30, 40), to a part (343) of the piston (24, 34, 44) for the purpose of assisting the pressure (p₂) which is exerted on the piston (24, 34, 44) by the concentrated salt water (13) introduced into the discharge chambers (22, 32, 42).

2. Method according to Claim 1,
**characterized in that** the concentrated salt water (13) is introduced alternately into the discharge chamber (22, 32, 42) of one of the several piston devices (20, 30, 40), whereby simultaneously the salt water (11) is conveyed from the intake chamber (21, 31, 41) of the same piston device (20, 30, 40) into the membrane module (3), and **in that** simultaneously salt water (10) at the first pressure level (p₁) is introduced into the intake chamber (21, 31, 41) of a different piston device (20, 30, 40), whereby the concentrated salt water (14) is discharged from the discharge chamber (22, 32, 42) of the same piston device (20, 30, 40) at a low pressure level.

3. Method according to Claim 2
**characterized in that** the piston devices (20, 30, 40) of the pressure-compensating device (2) are controlled in such a manner that simultaneously salt water (10) is introduced into the intake chamber (21, 31, 41) of at least one piston device (20, 30, 40), concentrated salt water (14) is discharged from the discharge chamber (22, 32, 42) of the same piston device (20, 30, 40), concentrated salt water (13) is introduced into the discharge chamber (22, 32, 42) of at least one other piston device (20, 30, 40), and salt water (11) from the intake chamber (21, 31, 41) of the same piston device (20, 30, 40) is conveyed to the membrane device (3).

4. Method according to Claim 3,
**characterized in that** the piston devices (20, 30, 40) are regulated by controllable intake- and discharge valves (25 - 28, 35 - 38, 45 - 48).

5. Reverse osmosis device for the continuous desalting of water, in particular for the desalting of sea water,
- having a membrane module (3) for separating salt water (11) which has been introduced into desalted water (12) and concentrated salt water (13),
- having a pressure-compensating device (2), which includes a plurality of piston devices (20, 30, 40), for continuously supplying the salt water (11) at an increased pressure (p₂) into the membrane module (3) and discharging the concentrated salt water (13) so that it releases its pressure energy, and
- having a feed pump (1) for introducing salt water (10) at a pressure (p₁) to the pressure-compensating device (2), wherein
- the piston devices (20, 30, 40) on the piston front surface have an intake chamber (21, 31, 41) connected to a feed pump (1) and to the membrane module (3), and
- the piston devices (20, 30, 40) on the piston rear face have a discharge chamber (22, 32, 42) connected to the membrane module (3) and to a discharge line (4) for the concentrated salt water (14),
**characterized**
- **in that** the piston devices (20, 30, 40) additionally have a pressure chamber (23, 33, 43) on the piston rear face, and the pressure chambers are hydraulically connected to one another, so that, in operation, a continuous pressure (p₃) can be applied to a part (343) of the piston (24, 34, 44) for the purpose of assisting the pressure (p₂) which is exerted upon the piston (24, 34, 44) by the concentrated salt water (13) introduced into the discharge chamber (22, 32, 42).

6. Device according to Claim 5
**characterized in that** the piston devices (20, 30, 40) are controlled in such a manner that simultaneously salt water (10) is introduced into the intake chamber (21, 31, 41) of at least one piston device (20, 30, 40), concentrated salt water (14) is discharged from the discharge chamber (22, 32, 42) of the same piston device (20, 30, 40), concentrated salt water (13) is introduced into the discharge chamber (22, 32, 42) of at least one other piston device (20, 30, 40), and salt water (11) is conveyed from the intake chamber (21, 31, 41) of the same piston device (20, 30, 40) to the membrane device (3).

7. Device according to Claim 6,
**characterized in that** the piston devices (20, 30, 40) are regulated by controllable intake and discharge valves (25 - 28, 35 - 38, 45 - 48).

8. Device according to Claim 7
**characterized in that** the connecting lines (5) from the membrane module (3) to the discharge chambers (22, 32, 42) of the piston devices (20, 30, 40) and the lines (4) to discharge concentrated salt water (14) from the discharge chambers (22, 32, 42) contain actively controllable valves (25, 26, 35, 36, 45, 46).

9. Device according to one of Claims 5 to 8,
**characterized in that** the pressure-compensating device (2) contains three identical piston devices (20, 30, 40).

10. Device according to one of Claims 5 to 9,
**characterized in that** the pistons (24, 34, 44) of the piston devices (20, 30, 40) are designed in such a manner that the pressure level (p₃) prevailing in the pressure chamber (23, 33, 43) can act upon one quarter of the surface area of the rear side of the piston (343) and the pressure prevailing in the discharge chamber (22, 32, 42) can act upon three quarters of the surface area of the rear side of the piston (342).

## Revendications

1. Procédé pour dessaler de l'eau de façon continue, en particulier pour dessaler de l'eau de mer,
- de l'eau de mer (11) étant introduite dans un module de membrane (3) et étant séparée en eau dessalée (12) et en eau salée concentrée (13),
- l'eau salée (11) étant conduite, de façon continue, dans le module de membrane (3) avec une pression élevée (p₂) par un dispositif compensateur de pression (2) comprenant plusieurs dispositifs à piston (20, 30, 40),
- l'eau salée concentrée (13) étant évacuée du dispositif compensateur de pression (2) par la transmission de son énergie de pression,
- de l'eau salée (10) étant introduite dans le dispositif compensateur de pression (2) sous une pression (p₁) au moyen d'une pompe d'alimentation (1),
- les dispositifs à piston (20, 30, 40) comprenant une chambre d'entrée (21, 31, 41) reliée à la pompe d'alimentation (1) et au module de membrane (3) sur la partie avant du piston et une chambre de sortie (22, 32, 42) reliée au module membrane (3) et une évacuation (4) pour l'eau salée concentrée (14) sur la partie arrière du piston,
**caractérisé en ce que** grâce à un raccordement hydraulique entre des chambres de pression (23, 33, 43) prévues sur la partie arrière des pistons des dispositifs à piston (20, 30, 40) lors du fonctionnement, une pression continue (p₃) est appliquée sur une partie (343) du piston (24, 34, 44) pour soutenir la pression (p₂), qui est exercée sur le piston (24, 34, 44) par l'eau salée concentrée(13) introduite dans les chambres de sortie (22, 32, 42).

2. Procédé selon la revendication 1, **caractérisé en ce que** l'eau salée concentrée (13) est introduite en alternance dans la chambre de sortie (22, 32, 42) de l'un des dispositifs à piston (20, 30, 40), par lequel l'eau salée (11) est respectivement simultanément. conduite de la chambre d'entrée (21, 31, 41) du même dispositif à piston (20, 30, 40) vers le module de membrane (3), et **en ce que** de l'eau salée (10) est en même temps introduite sous la première pression (p₁) dans la chambre d'entrée (21, 31, 41) d'un autre dispositif à piston (20, 30, 40), par lequel l'eau salée concentrée (14) est évacuée, sous basse pression, de la chambre de sortie (22, 32, 42) du même dispositif à piston (20, 30, 40).

3. Procédé selon la revendication 2, **caractérisé en ce que** les dispositifs à piston (20, 30, 40) du dispositif compensateur de pression (2) sont réglés de telle sorte que de l'eau salée (10) soit respectivement simultanément introduite dans la chambre d'entrée (21, 31, 41) d'au moins un dispositif à piston (20, 30, 40), que de l'eau salée concentrée (14) soit évacuée de la chambre de sortie (22, 32, 42) du même dispositif à piston (20, 30, 40), que de l'eau salée concentrée (13) soit introduite dans la chambre de sortie (22, 32, 42) d'au moins un autre dispositif à piston (20, 30, 40) et que de l'eau salée (11) du dispositif de membrane (3) soit évacuée de la chambre d'entrée (21, 31, 41) du même dispositif à piston (20, 30, 40).

4. Procédé selon la revendication 3, **caractérisé en ce que** le contrôle des dispositifs à piston (20, 30, 40) a lieu via des soupapes d'admission et d'échappement (25-28, 35-38, 45-48) réglables.

5. Dispositif à osmose inverse pour dessaler de l'eau de façon continue, en particulier pour dessaler de l'eau de mer,
- avec un module de membrane (3) permettant la séparation d'eau salée (11) introduite en eau dessalée (12) et en eau salée concentrée (13),
- avec un dispositif compensateur de pression (2) comprenant plusieurs dispositifs à piston (20, 30, 40) permettant de conduire en continu l'eau salée (11) avec une pression élevée (p₂) dans le module de membrane (3) et d'évacuer l'eau salée concentrée (13) par la transmission de son énergie de pression et
- avec une pompe d'alimentation (1) pour l'introduction d'eau salée (10) sous une pression (p₁) pour le dispositif compensateur de pression (2),
- les dispositifs à piston (20, 30, 40) comprenant une chambre d'entrée (21, 31, 41) reliée à une pompe d'alimentation (1) et au module de membrane (3) sur la partie avant du piston et
- les dispositifs à piston (20, 30, 40) comprenant une chambre de sortie (22, 32, 42) reliée au module de membrane (3) et à une évacuation (4) pour l'eau salée concentrée (14) sur la partie arrière du piston,
**caractérisé en ce que**
- les dispositifs à piston (20, 30, 40) comprennent en outre une chambre de pression (23, 33, 43) sur la partie arrière du piston et les chambres à pression sont raccordées de manière hydraulique les unes au-dessous des autres, de telle sorte qu'en fonctionnement une pression continue (p₃) est applicable sur une partie (343) du piston (24, 34, 44) permettant de soutenir la pression (p₂), qui est exercée sur le piston (24, 34, 44) par l'eau salée concentrée (13) introduite dans la chambre de sortie (22, 32, 42).

6. Dispositif selon la revendication 5, **caractérisé en ce que** les dispositifs à piston (20, 30, 40) sont réglés de telle sorte que de l'eau salée (10) soit introduite respectivement simultanément dans la chambre d'entrée (21, 31, 41) d'au moins un dispositif à piston (20, 30, 40), que de l'eau salée concentrée (14) soit évacuée de la chambre de sortie (22, 32, 42) du même dispositif à piston (20, 30, 40), que de l'eau salée concentrée (13) soit introduite dans la chambre de sortie (22, 32, 42) d'au moins un autre dispositif à piston (20, 30, 40) et que de l'eau salée (11) du dispositif de membrane (3) soit évacuée de la chambre d'entrée (21, 31, 41) du même dispositif à piston (20, 30, 40).

7. Dispositif selon la revendication 6, **caractérisé en ce que** des soupapes d'admission et d'échappement réglables (25-28, 35-38, 45-48) sont prévues pour le contrôle des dispositifs à piston (20, 30, 40).

8. Dispositif selon la revendication 7, **caractérisé en ce que** les conduites de raccordement (5) du module de membrane (3) vers les chambres de sortie (22, 32, 42) des dispositifs à piston (20, 30, 40) et les évacuations (4) de l'eau salée concentrée (14) provenant des chambres de sortie (22, 32, 42) comprennent des soupapes commutables de façon active (25, 26, 35, 36, 45, 46).

9. Dispositif selon l'une des revendications 5 à 8, **caractérisé en ce que** le dispositif de compensation de pression (2) comprend trois dispositifs à piston identiques (20, 30, 40).

10. Dispositif selon l'une des revendications 5 à 9,
**caractérisé en ce que** les pistons (24, 34, 44) des dispositifs à pistons (20, 30, 40) sont définis de telle sorte que la pression (p₃) régnant dans la chambre de pression (23, 33, 43) peut agir sur un quart de la surface de la partie arrière du piston (343) et la pression régnant dans la chambre de sortie (22, 32, 42) sur trois quarts de la surface de la partie arrière du piston (342).
